Europäisches Patentamt

(19) European Patent Office

Office européen des brevets

(11) Numéro de publication: **0 273 079**
**B1**

(12) **FASCICULE DE BREVET EUROPEEN**

(45) Date de publication du fascicule du brevet:
20.06.90

(51) Int. Cl.⁵: **F16B 39/02**, F16B 39/28

(21) Numéro de dépôt: 86402953.3

(22) Date de dépôt: 29.12.86

(54) **Ensemble vis-écrou indesserrable.**

(43) Date de publication de la demande:
06.07.88 Bulletin 88/27

(45) Mention de la délivrance du brevet:
20.06.90 Bulletin 90/25

(84) Etats contractants désignés:
BE DE ES GB IT NL SE

(56) Documents cités:
BE-A- 383 002
FR-A- 1 198 913
FR-A- 1 199 636
FR-A- 2 454 556
FR-A- 2 584 153
US-A- 3 907 017
US-A- 4 258 607

(73) Titulaire: Etablissements SAINT - CHAMOND - GRANAT,
12, rue d'Epluches, F-95310 Saint Ouen l'Aumone(FR)

(72) Inventeur: Fauchet, Christian Roger Jacques, 5, rue des
Fonds de Cuves, F-95240 Cormeilles en Parisis(FR)

(74) Mandataire: Chameroy, Claude et al, c/o Cabinet
Malemont 42, avenue du Président Wilson,
F-75116 Paris(FR)

## Description

La présente invention concerne un ensemble vis-écrou indesserrable, c'est-à-dire un ensemble de fixation présentant un couple résistant au desserrage.

Les systèmes de fixation indesserrables actuellement connus reposent en général sur une déformation radiale permanente de l'écrou avant montage, qui produit un couple résistant au desserrage par frottement sur le filetage de la vis. De tels systèmes, décrits par exemple dans FR-A 1 198 913, présentent cependant des inconvénients.

En effet, le frottement se manifeste au vissage et provoque un couple résistant qui introduit un facteur de dispersion important dans la relation entre le couple de montage et la tension effective dans l'assemblage.

Par ailleurs, le couple de freinage au dévissage chute sous l'action du premier vissage de sorte que pour garantir un couple de freinage suffisant en service il est nécessaire d'atteindre un niveau de déformation de l'écrou qui induit un couple résistant relativement élevé au vissage.

On notera enfin que dans la mesure où il n'y a pas de véritable blocage de l'écrou sur la vis, un desserrage éventuel en service, par exemple sous l'action de vibrations importantes, ne peut pas être totalement écarté.

On connait également, par le document BE-A 383 002, un système de fixation indesserrable mais qui présente l'inconvénient de nécessiter plusieurs écrous.

La présente invention a donc pour but principal de remédier à ces inconvénients et, pour ce faire, elle a pour objet un ensemble vis-écrou qui se caractérise essentiellement en ce que la vis comporte un ou plusieurs filets médians de diamètre réduit, tandis que l'écrou est conçu pour être déformé localement par une action extérieure au niveau de ces filets de diamètre réduit après serrage au couple désiré, afin que le métal déplacé vienne remplir l'intervalle laissé libre entre le filetage intérieur de l'écrou et lesdits filets de diamètre réduit de la vis.

Grâce à cette disposition, l'écrou peut être monté librement sur la vis, donc avec un couple de serrage bien déterminé et sa déformation locale ultérieure entraîne un verrouillage de l'écrou sur la vis rendant le système véritablement indesserrable sans l'action d'un couple élevé nettement supérieur au couple de serrage.

Dans une forme de réalisation particulière de l'invention, l'écrou comporte une protubérance extérieure dont la compression au moyen d'un outil approprié provoque le déplacement de métal nécessaire au niveau des filets de diamètre réduit de la vis.

De préférence, la vis est réalisée par laminage d'une pièce pourvue au préalable d'une gorge annulaire.

Ainsi, l'opération de laminage entraîne, au niveau de la gorge annulaire, la formation d'un filet incomplètement rempli à son sommet et qui est donc de damètre réduit par rapport aux autres filets formés.

Plusieurs formes d'exécution de l'invention sont décrites ci-après à titre d'exemples, en référence au dessin annexé dans lequel :

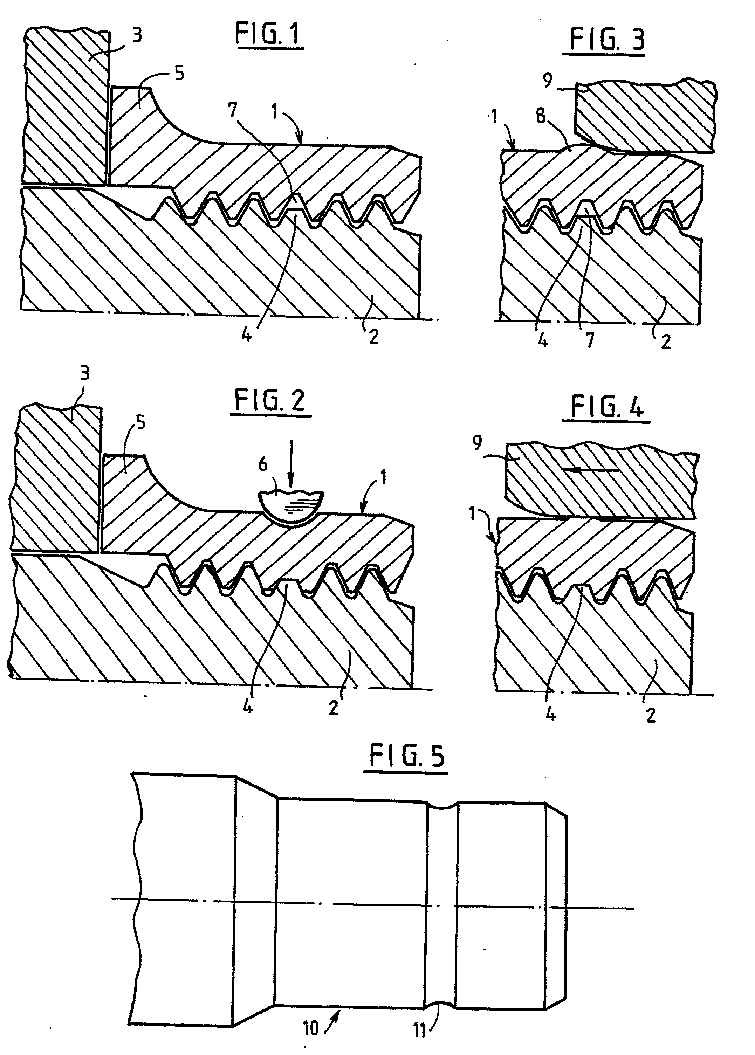

. la figure 1 est une vue en coupe axiale d'un ensemble vis-écrou conforme à l'invention en position d'assemblage ;

. la figure 2 représente le même ensemble après verrouillage de l'écrou sur la vis ;

. les figures 3 et 4 sont des vues analogues aux figures 1 et 2 d'une variante de réalisation de l'invention ; et

. la figure 5 illustre un mode de fabrication de la vis selon l'invention.

En se référant tout d'abord à la figure 1, on peut voir un écrou 1 monté sur une vis 2 afin de maintenir une pièce à assembler 3. Conformément à l'invention, la vis 2 est pourvue en 4 d'un filet médian dont le diamètre au sommet est sensiblement inférieur à celui des autres filets situés de part et d'autre.

L'écrou 1 peut ainsi être monté librement sur la vis 2, jusqu'à ce que son embase 5 vienne au contact de la pièce à assembler 3. Après serrage de l'écrou au couple désiré, un outil approprié, pouvant éventuellement être constitué par l'outil de vissage lui-même, provoque, par exemple au moyen d'une bille telle que 6, une déformation plastique locale de la surface extérieure de l'écrou au niveau du filet de diamètre réduit 4 de la vis 2. Ce faisant, le métal déplacé vient remplir l'intervalle 7 laissé libre entre le filetage intérieur de l'écrou et le filet de diamètre réduit de la vis, comme illustré sur la figure 2. L'écrou se trouve ainsi parfaitement verrouillé sur la vis et ne peut plus être desserré sans l'action d'un couple élevé, capable de faire revenir le métal de l'écrou à sa position initiale sous l'effet de l'augmentation du diamètre des autres filets.

Dans la variante de réalisation représentée sur les figures 3 et 4, l'écrou 1 est pourvu d'une protubérance extérieure 8, dont la compression au moyen d'un outil 9 en forme de filière provoque, au niveau du filet 4 de diamètre réduit, le déplacement de métal nécessaire au verrouillage de l'écrou sur la vis.

Le ou les filets médians de diamètre réduit peuvent naturellement être obtenus par usinage à l'outil coupant du sommet des filets dans la zone adéquate de la vis.

D'une manière encore plus économique, on peut obtenir directement un filet de diamètre réduit lors de la fabrication de la vis par le procédé de roulage ou le laminage. A cet effet et comme représenté sur la figure 5, on utilise une pièce brute telle que 10 qui est pourvue au préalable d'une gorge annulaire 11. L'opération de laminage entraîne, au niveau de cette gorge annulaire 11, la formation d'un filet incomplètement rempli à son sommet par suite du moindre volume de métal à déplacer, tandis que les autres filets situés de part et d'autre présentent un diamètre en sommet supérieur en raison d'un remplissage complet de l'outil de roulage.

## Revendications

1. Ensemble vis-écrou indesserrable, caractérisé en ce que la vis (2) comporte un ou plusieurs filets médians (4) de diamètre réduit, tandis que l'écrou (1) est conçu pour être déformé localement par une action extérieure au niveau de ces filets de diamètre réduit après serrage au couple désiré, afin que le métal déplacé vienne remplir l'intervalle (7) laissé libre entre le filetage intérieur de l'écrou (1) et lesdits filets de diamètre réduit (4) de la vis (2).

2. Ensemble vis-écrou selon la revendication 1, caractérisé en ce que l'écrou (1) comporte une protubérance extérieure (8) dont la compression au moyen d'un outil approprié (9) provoque le déplacement de métal nécessaire au niveau des filets de diamètre réduit (4) de la vis (2).

3. Ensemble vis-écrou selon la revendication 1 ou 2, caractérisé en ce que la vis (2) est réalisée par laminage d'une pièce (10) pourvue au préalable d'une gorge annulaire (11).

## Patentansprüche

1. Nichtlösbarer Schrauben-Mutter-Satz, dadurch gekennezeichnet, daß die Schraube (2) ein oder mehrere mittlere Gewinde (4) mit verkleinertem Durchmesser aufweist, wobei die Schraubenmutter (1) so gestaltet ist, daß sie nach Festschrauben nach gewünschtem Drehmoment durch Außenwirkung an diesen Gewinden mit verkleinertem Durchmesser örtlicher Weise verformt wird, so daß das verdrängte Metall den zwischen dem Innengewinde der Schraubenmutter (1) und den Gewinden mit verkleinertem Durchmesser (4) der Schraube (2) freigelassenen Zwischenraum (7) nun füllt.

2. Schrauben-Mutter-Satz nach Anspruch 1, dadurch gekennzeichnet, daß die Schraubenmutter (1) eine äußere Ausstülpung (8) aufweist, deren Zusammendrückung mittels eines geeigneten Werkzeugs (9) die erforderliche Metallverdrängung an den Gewinden mit verkleinertem Durchmesser (4) der Schraube (2) verursacht.

3. Schrauben-Mutter-Satz nach Anspruch 1 oder 2, dadurch gekennzeichnet, daß die Schraube (2) durch Walzen eines im voraus mit einer ringförmigen Nut versehenen Werkstücks (10) hergestellt wird.

## Claims

1. A self-locking screw-nut assembly, characterized in that the screw (2) has one or more median threads (4) of reduced diameter, whereas the nut (1) is designed to be deformed locally by an external action at said reduced diameter threads after tightening to the desired torque, so that the displaced metal fills the gap (7) left free between the inner thread of the nut (1) and said reduced diameter threads (4) of the screw (2).

2. The screw-nut assembly according to claim 1, characterized in that the nut (1) has an external protuberance (8) whose compression by means of an appropriate tool (9) causes the required displacement of metal at the reduced diameter threads (4) of the screw (2).

3. The screw-nut assembly according to claim 1 or 2, characterized in that the screw (2) is formed by lamination of a piece (10) provided previously with an annular groove (11).

FIG.1

FIG.3

FIG.2

FIG.4

FIG.5